# EUROPEAN PATENT SPECIFICATION

(11) **EP 1 640 259 B1**
(45) Date of publication and mention of the grant of the patent: **02.07.2008**
(21) Application number: 05016101.7
(22) Date of filing: 25.07.2005
(51) Int. Cl.: B62J 27/00

(54) **Rider restraint device of two-wheeled vehicle**
Rückhaltevorrichtung für den Fahrer eines Zweiradfahrzeuges
Dispositif de retenue pour chauffeur d'un véhicule à deux roues

(30) Priority: 27.09.2004 JP 2004279227
(43) Date of publication of application: 29.03.2006
(73) Proprietor: HONDA MOTOR CO., LTD., Tokyo (JP)
(72) Inventor: Tsunoda, Kazuhiko, Wako-shi Saitama (JP); Kurata, Norihiro, Wako-shi Saitama (JP); Murata, Yutaka, Wako-shi Saitama (JP)
(74) Representative: Liska, Horst

(56) References cited:
- GB-A- 2 003 096
- US-A- 3 524 678
- US-A- 3 903 985
- US-B1- 6 406 092

## Description

The present invention relates to a scooter-type two-wheeled vehicle comprising a rider restraint device for restraining a rider from moving forward.

In a motorcycle, as a technology for restraining a rider from moving forward, a technology in which an airbag is disposed in the vicinity of a meter panel of the two-wheeled vehicle and is activated upon detection of an impact is disclosed in JP-A-H11(1999)-278342.

In JP-A-H11(1999)-278342, a space for mounting an airbag unit and a control unit thereof must be ensured in the vicinity of the meter panel, and a space for attaching an acceleration sensor must also be ensured. Accordingly, it has been difficult to apply the technology to a small two-wheeled vehicle.

GB 2 003 096 A discloses a rider restraint device of a motorcycle-type two-wheeled vehicle for restraining a rider of the motorcycle from moving forward, comprising: a head pipe for supporting a handle so as to be freely steerable; a straight pad support arm; a hinge member for supporting one end of said pad support arm on a main frame so that the pad support arm is freely inclinable forward by means of a forward load applied to a restraint pad provided at the other end of the pad support arm; and a damper for elastically supporting said pad support arm in an attitude in which the restraint pad is opposed to the rider, wherein said damper is compressed by absorbing the forward load applied to said restraint pad. As the pad support arm extends upward from the main frame between the head pipe and the seat, it may interfere with control of driving.

It is an object of the present invention to provide a rider restraint device of a scooter-type two-wheeled vehicle, which solves the above-described problem in the conventional art, and the pad support arm does not interfere with control of driving.

In order to achieve the above-described object, the present invention has features in taking means as below in a rider's movement restraint apparatus for restraining the rider of the two-wheeled vehicle from moving forward.
(1) A first feature of the present invention is a scooter-type two-wheeled vehicle comprising a head pipe for supporting a handle so as to be freely steerable and a rider restraint device for restraining a rider of the two-wheeled vehicle from moving forward, comprising: a pad support arm; a hinge member for pivotally supporting one end of the pad support arm on a flange protruding from said head pipe to the rider side so that the pad support arm is freely inclinable forward by means of a forward load applied to a restraint pad provided on the other end of the pad support arm; and a damper for elastically supporting said pad support arm in an attitude in which the restraint pad is opposed to the rider, wherein said damper is compressed by absorbing the forward load applied to said restraint pad, characterized in that said pad support arm is bent into a substantial L-shape, and the one end of the pad support arm pivotally supported by the said hinge member is the end of the short leg of the L-shape while the other end of the pad support arm is the end of the long leg of the L-shape, the long leg being positioned forwardly of the head pipe.
(2) A second feature of the present invention is that the damper includes an energy absorption member causing compressive plastic deformation to a compression stress.
(3) A third feature of the present invention is that the damper includes an energy absorption member causing expansive plastic deformation to the compression stress.

(1) According to an invention of claim 1, a part of the load applied to the restraint pad is consumed/absorbed as energy for compressing the damper, and accordingly, a load applied to the rider can be reduced. As the pad support arm extends forward of the head pipe, the pad support arm does not interfere with control of driving.
(2) According to inventions of claims 2 and 3, the damper is not compressed until so large a forward load that exceeds an elastic limit of the energy absorption member is applied to the restraint pad, and hence, the restraint pad does not move, either. Accordingly, a movement of the rider is suppressed to be small. Meanwhile, when so large the forward load that exceeds the elastic limit of the energy absorption member is applied to the restraint pad, the damper is compressed while maintaining its elasticity, and accordingly, the load applied to the rider can be reduced.

Fig. 1 is a side view of a scooter-type two-wheeled vehicle to which a rider restraint device of the present invention is applied.
Fig. 2 is a side view of a first embodiment of a structure elastically supporting a pad support arm to which a restraint pad is attached.
Fig. 3 is a view showing a state where a forward movement of a rider is inhibited by the restraint pad.
Fig. 4 is a side view of a second embodiment of elastically supporting, by a compressive deformation damper, the pad support arm to which the restraint pad is attached.
Fig. 5 is a cross-sectional view showing a structure of the compressive deformation damper.
Fig. 6 is a side view of a third embodiment of elastically supporting, by an expansive deformation damper, the pad support arm to which the restraint pad is attached.
Fig. 7 is a cross-sectional view showing a structure of the expansive deformation damper.
Fig. 8 is a graph showing a relation between a movement of the restraint pad and a load applied to the rider.

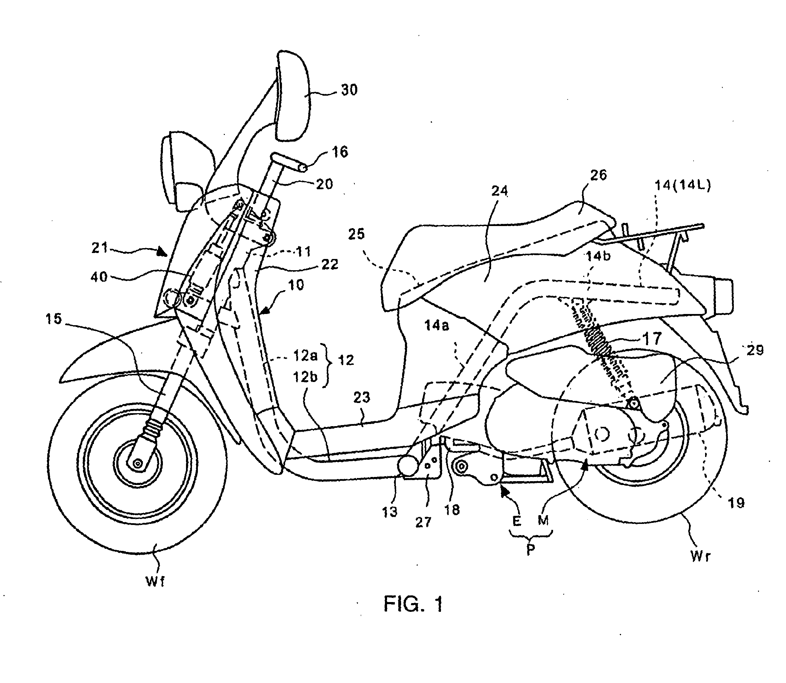

Preferred embodiments of the present invention will be described below in detail with reference to the drawings. Fig. 1 is a side view of a scooter-type two-wheeled vehicle to which a rider restraint device of the present invention is applied. A body frame 10 is mainly constructed of a main frame pipe 12 whose front end portion is fixed to a head pipe 11, a cross pipe 13 fixed horizontally and perpendicularly to the rear end portion of the main frame pipe 12, and a left and right pair of rear frame pipes 14 (14L, 14R) whose front ends are individually provided continuously to both end portions of the cross pipe 13.

The main frame pipe 12 is constructed by continuously providing a down frame portion 12a inclined downward to the rear from the head pipe 11 and a lower frame portion 12b extended substantially horizontally to the rear from the rear end of the down frame portion 12a integrally with each other. The cross pipe 13 is extended in a crosswise direction of the body frame 10, and the rear end portion of the main frame pipe 12 is fixed perpendicularly to the center portion of the cross pipe 13. The left and right pair of rear frame pipes. 14 is constructed by continuously providing rising frame portions 14a and upper frame portions 14b integrally with each other, the rising frame portions 14a being extended upward toward the rear from both end portions of the cross pipe 13, and the upper frame portions 14b being extended substantially horizontally to the rear from the rear ends of the rising frames 14a and being curved on a horizontal plane so that rear end openings thereof can be opposite to each other.

On the head pipe 11, a front fork 15 supporting a front wheel Wf is supported so as to be freely steerable, and to the upper end of the front fork 15, a steering handle 16 is coupled with a handle pipe 20 interposed therebetween. In a forward part of the rear frame pipes 14, a power unit P is supported so as to be freely swingable in the vertical direction, the power unit P formed of an engine E disposed in front of a rear wheel Wr and a continuously variable transmission M disposed on the left side of the rear wheel Wr. The rear wheel Wr is pivotally supported on the rear portion of the power unit P. On the upper left side of the rear wheel Wr, an air cleaner 29 is disposed.

A rear cushion unit 17 is provided between the rear portion of the power unit P and the left-side rear frame pipe 14L. An exhaust pipe 18 guiding exhaust gas from the engine E is extended out of the engine E to the right side of the rear wheel Wr. The exhaust pipe 18 is connected to an exhaust muffler 19 disposed on the right side of the rear wheel Wr. In a forward space between the left and right rear frame pipes 14, a housing box 25 is supported so as to be disposed above the engine E.

The body frame 10 is covered with a body cover 21 made of synthetic resin. The body cover 21 includes a leg shield 22 covering in front of the legs of a rider, a step floor 23 continuous with a lower portion of the leg shield 22 so as to put feet of the rider thereon, and a side cover 24 continuous with the step floor 23 and covering the rear portion of the body from both sides.

The housing box 25 and a fuel tank (not shown) are covered with the side cover 24, and a seat 26 covering the housing box 25 from the above is attached to the upper portion of the side cover 24 so as to be openable. Specifically, the step floor 23 is formed in the body cover 21 so as to be disposed between the steering handle 16 and the seat 26, and below the rear end of the step floor 23, a frame-side bracket 27 for supporting the power unit P on the body frame 10 so as to be swingable is disposed.

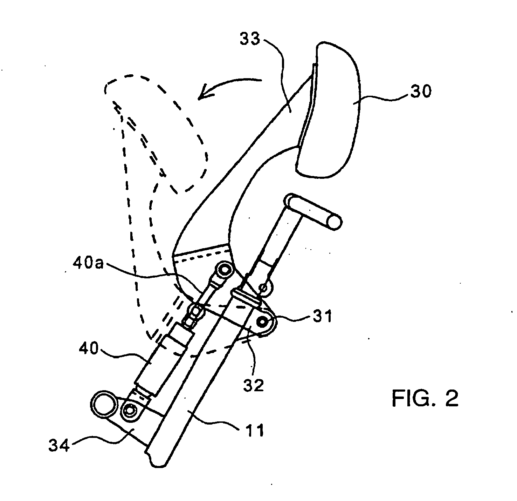

Referring to Fig. 2 in combination, on the upper end portion of the head pipe 11, a flange 32 supporting a hinge shaft 31 is protruded to the rider side, and one end of a pad support arm 33 including a rider restraint pad 30 on the other end is pivotally supported by the hinge shaft 31 so as to be freely inclinable forward with the head pipe 11 interposed therebetween. The pad support arm 33 is bent into a substantial L shape, and to the vicinity of such a bent portion, a piston rod 40a of a damper 40 freely restorable is coupled. The lower end portion of the damper 40 is supported by a stay 34 extended forward in the vicinity of the lower end portion of the head pipe 11. The pad support arm 33 is elastically supported by the damper 40 in an attitude in which the restraint pad 30 thereof is opposed to the rider.

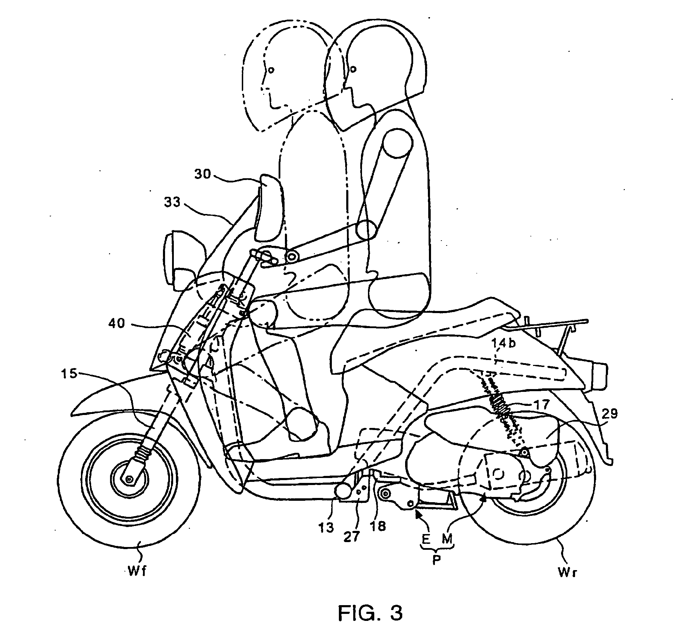

As shown in Fig. 3, even if the rider moves forward owing to inertia at the time of braking and so on, the vicinity of the chest of the rider is held by the restraint pad 30, and a further movement is inhibited. Accordingly, the forward movement of the rider is limited within a predetermined range. Moreover, in this embodiment, a part of a forward load applied to the restraint pad 30 acts on the damper 40 through the pad support arm 33 with the hinge shaft 31 taken as a fulcrum, and is absorbed by compressing the damper 40. Accordingly, a load applied to the rider can be absorbed.

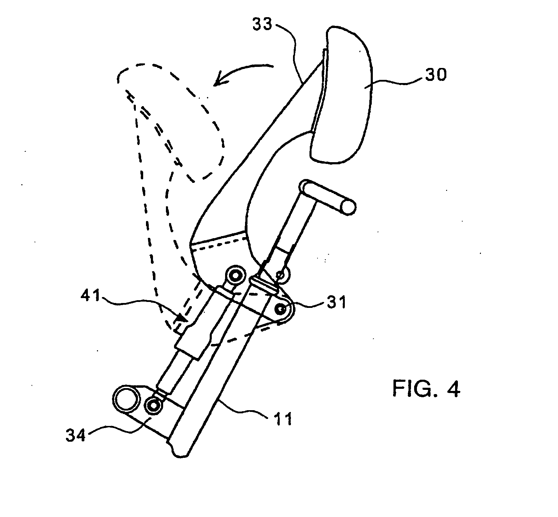

Fig. 4 is a side view of a second embodiment of the structure elastically supporting the pad support arm 33, where the same reference numerals as those in the above description denote the same or equivalent portions. This embodiment has a feature in adopting a compressive deformation damper 41 absorbing energy by allowing an inner cylinder thereof to cause compressive plastic deformation in a diameter direction to a compression stress.

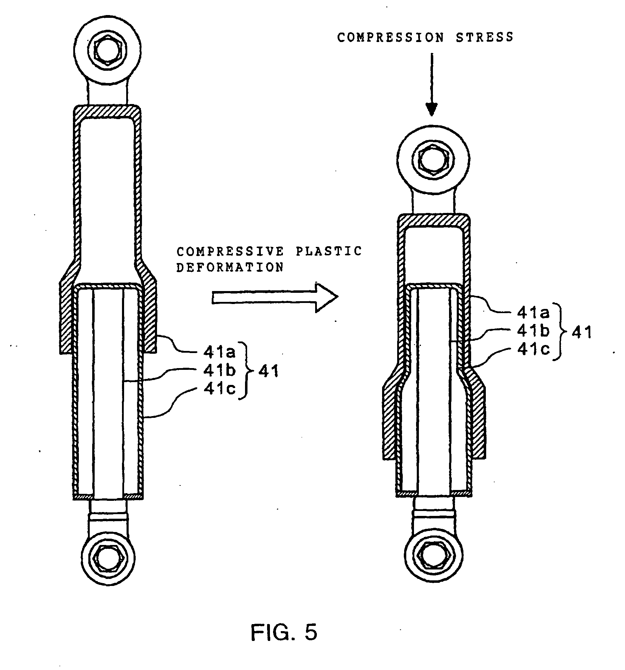

Referring to Fig. 5 in combination, the compressive deformation damper 41 is mainly constructed of an outer cylinder 41a, a piston rod 41b, and a flexible inner cylinder 41c covering the piston rode 41b. The upper end portion of the outer cylinder 41a is coupled to the pad support arm 33, and the lower end portion of the piston rod 41b is coupled to the stay 34.

In such a construction, when a large forward load is applied to the restraint pad 30, and the compression stress acting on the compressive deformation damper 41 exceeds a stress limit (yield point) of the inner cylinder 41c, the inner cylinder 41c is pressed into the outer cylinder 41a while causing the compressive plastic deformation in the diameter direction as shown on the right side of Fig. 5.

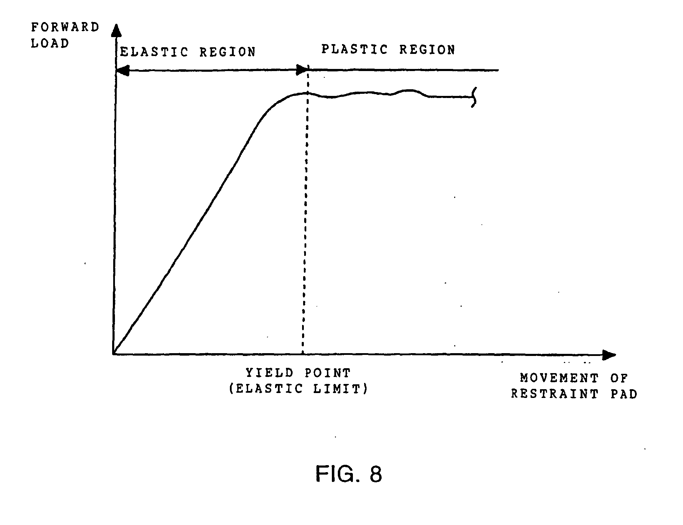

Fig. 8 is a view showing a relation between a forward movement of the restraint pad 30 and a load applied to the chest of the rider when the rider is restrained by the restraint pad 30.

Even if the forward load is applied to the restraint pad 30, if the compression stress acting on the compressive deformation damper 41 does not exceed the stress limit of the inner cylinder 41c, the compressive deformation damper 41 is not compressed. Thus, the movement of the restraint pad 30 is suppressed to be very little. When the forward load applied to the restraint pad 30 is increased, and the compression stress acting on the compressive deformation damper 41 exceeds the stress limit of the inner cylinder 41c, the compressive plastic deformation of the inner cylinder 41c starts. Accordingly, the compressive deformation damper 41 is compressed while maintaining its elasticity. Hence, the relation between the forward movement of the restraint pad 30 and the load applied to the chest of the rider is maintained to be substantially constant even after the plastic deformation of the compressive deformation damper 41 has started. Accordingly, even in the case where the large forward load is applied to the restraint pad 30, the restraint pad 30 keeps on absorbing a part of the load concerned, thus making it possible to reduce the load applied to the rider.

As described above, in this embodiment, the inner cylinder 41c is composed of the energy absorption member causing the plastic deformation to the compression stress. Accordingly, a compression amount of the damper 41 can be made small until so large the forward load that exceeds the elastic limit of the inner cylinder 41c is applied to the restraint pad 30, and hence, the restraint pad 30 does not move either. Accordingly, the movement of the rider can be suppressed. Meanwhile, when so large the forward load that exceeds the elastic limit of the damper 41 is applied to the restraint pad 30, the damper 41 is compressed while maintaining its elasticity, and accordingly, the load applied to the rider can be reduced.

In other words, in this embodiment, the movement of the restraint pad 30 is changed rectangularly or abruptly with respect to a change of the forward load applied to the restraint pad 30. Accordingly, a movement of the restraint pad 30 can be suppressed to the minimum in a range where the load applied to the rider is small. Meanwhile, when the load applied to the rider is increased, it is made possible to reduce the load concerned.

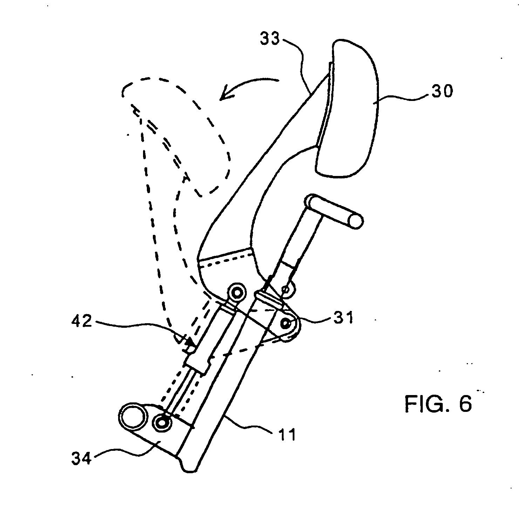

Fig. 6 is a side view of a third embodiment of the structure elastically supporting the pad support arm 33, where the same reference numerals as those in the above description denote the same or equivalent portions. This embodiment has a feature in adopting an expansive deformation damper 42 absorbing energy by allowing an outer cylinder thereof to cause expansive plastic deformation in a diameter direction to the compression stress.

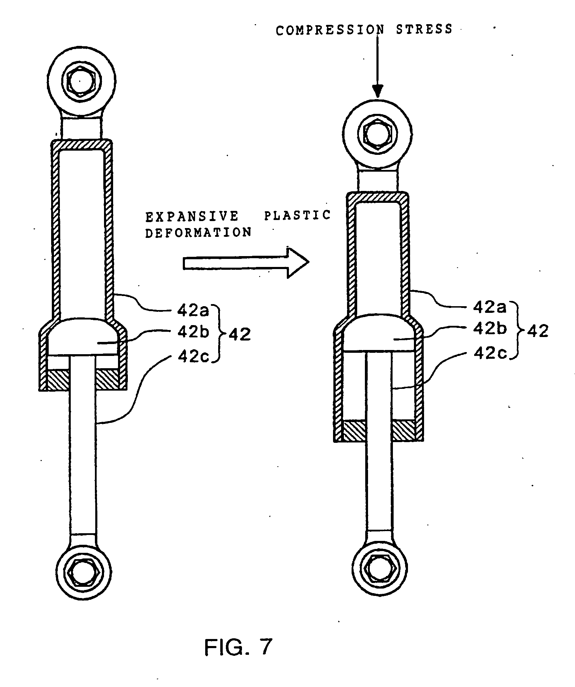

Referring to Fig. 7 in combination, the expansive deformation damper 42 is mainly constructed of a flexible outer cylinder 42a, a piston 42b, and a piston rod 42c. The upper end portion of the outer cylinder 42a is coupled to the pad support arm 33, and the lower end portion of the piston rod 42c is coupled to the stay 34.

In such a construction, when a large forward load is applied to the restraint pad 30, and a compression stress acting on the expansive deformation damper 42 exceeds a stress limit (yield point) of the outer cylinder 42a, the piston 42b is pressed into the outer cylinder 42a while allowing the outer cylinder 42a to cause the expansive plastic deformation in the diameter direction.

Also in this embodiment, the outer cylinder 42a is composed of an energy absorption member causing the plastic deformation to the compression stress as in the second embodiment. Accordingly, a compression amount of the damper 42 can be made small until so large a forward load that exceeds an elastic limit of the outer cylinder 42a is applied to the restraint pad 30, and hence, the restraint pad 30 does not move either. Accordingly, the movement of the rider can be suppressed. Meanwhile, when so large the forward load that exceeds the elastic limit of the damper 42 is applied to the restraint pad 30, the damper 42 is compressed while maintaining its elasticity, and accordingly, the load applied to the rider can be reduced.

## Claims

1. A scooter-type two-wheeled vehicle comprising a head pipe (11) for supporting a handle (16) so as to be freely steerable and a rider restraint device for restraining a rider of the two-wheeled vehicle from moving forward, comprising:
a pad support arm (33);
a hinge member (31) for pivotally supporting one end of the pad support arm (33) on a flange (32) protruding from said head pipe (11) to the rider side so that the pad support arm (33) is freely inclinable forward by means of a forward load applied to a restraint pad (30) provided on the other end of the pad support arm (33); and
a damper (40) for elastically supporting said pad support arm (33) in an attitude in which the restraint pad (30) is opposed to the rider,
wherein said damper (40) is compressed by absorbing the forward load applied to said restraint pad (30)
**characterized in that**
said pad support arm (33) is bent into a substantial L-shape, and the one end of the pad support arm (33) pivotally supported by the said hinge member (31) is the end of the short leg of the L-shape while the other end of the pad support arm (33) is the end of the long leg of the L-shape, the long leg being positioned forwardly of the head pipe (11).

2. The scooter-type two-wheeled vehicle according to claim 1, wherein said damper (40) includes an energy absorption member (41) causing compressive plastic deformation to a compression stress.

3. The scooter-type two-wheeled vehicle according to claim 1, wherein said damper (40) includes an energy absorption member (42) causing expansive plastic deformation to a compression stress.

## Patentansprüche

1. Zweiradfahrzeug in Rollerbauart, umfassend ein Kopfrohr (11) zum frei lenkbaren Lagern eines Lenkers (16) sowie eine Fahrerrückhaltevorrichtung zum Begrenzen einer Vorwärtsbewegung eines Fahrers des Zweiradfahrzeugs, umfassend:
einen Polstertragarm (33);
ein Gelenkelement (31) zum schwenkbaren Lagern von einem Ende des Polstertragarms (33) an einem Flansch (32), der von dem Kopfrohr (11) zur Seite des Fahrers hin vorsteht, so dass der Polstertragarm mittels einer vorwärtigen Last, die auf ein am anderen Ende des Polstertragarms (33) vorgesehenes Rückhaltepolster (30) einwirkt, frei nach vorne neigbar ist; und
einen Dämpfer (40) zum elastischen Stützen des Polstertragarms (33) in einer Haltung, in der das Rückhaltepolster (30) dem Fahrer gegenüberliegt,
worin der Dämpfer (40) zusammengedrückt wird, indem die auf das Rückhaltepolster (30) einwirkende vorwärtige Last absorbiert wird, **dadurch gekennzeichnet, dass** der Polstertragarm (33) angenähert L-förmig gebogen ist und das eine Ende des Polstertragarms (33), das an dem Gelenkelement (31) schwenkbar gelagert ist, das Ende des kurzen Schenkels der L-Form ist, während das andere Ende des Polstertragarms (33) das Ende des langen Schenkels der L-Form ist, wobei der lange Schenkel vor dem Kopfrohr (11) angeordnet ist.

2. Zweiradfahrzeug in Rollerbauart nach Anspruch 1, worin der Dämpfer (40) ein Energieabsorptionselement (41) enthält, das auf eine Kompressionsbelastung eine plastische Kompressionsverformung bewirkt.

3. Zweiradfahrzeug in Rollerbauart nach Anspruch 1, worin der Dämpfer (40) ein Energieabsorptionselement (42) enthält, das auf eine Kompressionsbelastung eine plastische Expansionsverformung bewirkt.

## Revendications

1. Véhicule à deux roues du type scooter comprenant un tube de tête (11) destiné à supporter une poignée (16) de manière à pouvoir être dirigé librement et un dispositif de retenue pour conducteur destiné à empêcher un conducteur du véhicule à deux roues de se déplacer vers l'avant, comprenant :
un bras de support de coussin (33) ;
un élément d'articulation (31) destiné à supporter de manière pivotante une extrémité du bras de support de coussin (33) sur une bride (32) dépassant dudit tube de tête (11) vers le côté conducteur de sorte que le bras de support de coussin (33) peut être incliné librement vers l'avant au moyen d'une charge avant appliquée sur un coussin de retenue (30) prévu sur l'autre extrémité du bras de support de coussin (33) ; et
un amortisseur (40) destiné à supporter de manière élastique ledit bras de support de coussin (33) dans une attitude dans laquelle le coussin de contrainte (30) est opposé au conducteur,
dans lequel ledit amortisseur (40) est comprimé en absorbant la charge avant appliquée sur ledit coussin de contrainte (30),
**caractérisé en ce que**
ledit bras de support de coussin (33) est fléchi suivant une forme sensible de L, et l'une des extrémités du bras de support de coussin (33) supportée de manière pivotante par ledit élément d'articulation (31) est l'extrémité de la jambe courte de la forme en L tandis que l'autre extrémité du bras de support de coussin (33) est l'extrémité de la jambe longue de la forme de L, la jambe longue étant positionnée vers l'avant du tube de tête (11).

2. Véhicule à deux roues du type scooter selon la revendication 1, dans lequel ledit amortisseur (40) comporte un élément d'absorption d'énergie (41) provoquant une déformation plastique compressive jusqu'à une contrainte de compression.

3. Véhicule à deux roues du type scooter selon la revendication 1, dans lequel ledit amortisseur (40) comporte un élément d'absorption d'énergie (42) provoquant une déformation plastique expansive jusqu'à une contrainte de compression.
